# NEW EUROPEAN PATENT SPECIFICATION

(11) **EP 0 573 981 B2**
(45) Date of publication and mention of the opposition decision: **17.05.2000**
(45) Mention of the grant of the patent: 23.10.1996
(21) Application number: 93109288.6
(22) Date of filing: 09.06.1993
(51) Int. Cl.: B60R 9/06, B60R 9/12

(54) **Rack assembly particularly for all-terrain vehicles, closed vans and the like**
Halter, insbesondere für Geländefahrzeuge, geschlossene Lastkraftwagen und dergleichen
Porte-accessoires pour véhicules tout-terrain, en particulier fourgons fermés et similaire

(30) Priority: 11.06.1992 IT MI921440
(43) Date of publication of application: 15.12.1993
(73) Proprietor: FABBRI S.r.l., I-25040 Bornato Cazzago S. Martino (Brescia) (IT)
(72) Inventor: Fabbri Corsarini, Luciano, I-25017 Lonato (Brescia) (IT)
(74) Representative: Modiano, Guido, Dr.-Ing.

(56) References cited:
- DE-C- 688 407
- US-A- 1 798 239
- US-A- 3 972 457
- US-A- 4 392 597
- REVUE AUTOMOBILE no. 49, 4 December 1987, BERNE SUISSE page 29 'des chaines à neige aux porte-skis'

## Description

The present invention relates to a rack assembly on motor vehicles, particularly for all-terrain vehicles, closed vans and the like having a spare tire attached outwardly on the vehicle body as disclosed, for example, in the US-A-3 972 457.

As is known, ski racks fixable by means of an appropriate plate to the bolts for fixing the spare tire to the motor vehicle are currently manufactured for all-terrain vehicles, closed vans and generally for any vehicle in which the spare tire is located on the outside of the vehicle, usually in its rear part.

The above-mentioned types of fixing therefore entails the manufacture of assembly kits having various plates according to the different models, with evident problems in production, distribution and sales.

Furthermore, the type of fixing currently used entails, for the disassembly of the ski rack, the loosening and re-tightening of all the spare tire supporting bolts, with the evident time losses caused by this operation. These same problems also arise if it is necessary to replace a wheel due to a flat tire or to other similar problems.

A rack assembly as defined in the preamble of claim 1 is disclosed, for example, in US-A-4 392 597.

A principal object of the present invention is to eliminate or substantially reduce the drawbacks of the prior art by providing a rack particularly for all-terrain vehicles, closed vans and the like which allows rapid and simple assembly and disassembly without the aid of any tool.

A further object of the present invention is to provide a ski rack which can adapt automatically to any externally-mounted spare tire, thus eliminating the need for diversified production of assembly kits.

Another object of the present invention is to provide a ski rack provided with anti-theft means for preventing its unlawful removal from the motor vehicle.

Another object of the present invention is to provide a ski rack which is highly reliable, relatively easy to manufacture and at competitive costs.

With these and other objects in view, there is provided, according to the invention, a rack as claimed in the independent claim 1.

The rack according to the present invention will become apparent from the following description of a preferred but not exclusive embodiment thereof, illustrated only by way of non-limitative example in the accompanying drawings, wherein:
figure 1 is a perspective view of a ski rack according to the present invention;
figure 2 is a perspective view of a ski rack according to the present invention, installed on a tire;
figure 3 is a lateral elevation view, with a possible embodiment of the tightening means in open position; and
figure 4 is a lateral elevation view, with the tightening means in closed position.

With reference to the above figures, a ski rack particularly for all-terrain vehicles, closed vans and the like according to the present invention comprises a supporting frame which is composed, for example, of two uprights 1 and 2 ending, at the top and bottom, with bracket-like portions respectively designated by the reference numerals 1a, 2a, 1b and 2b.

A key-operated ski retainer 3 of a per se known type is fixed on the brackets 1a and 2a, whereas a conventional tray 4 for resting the rear ends of skis is mounted on the brackets 1b and 2b.

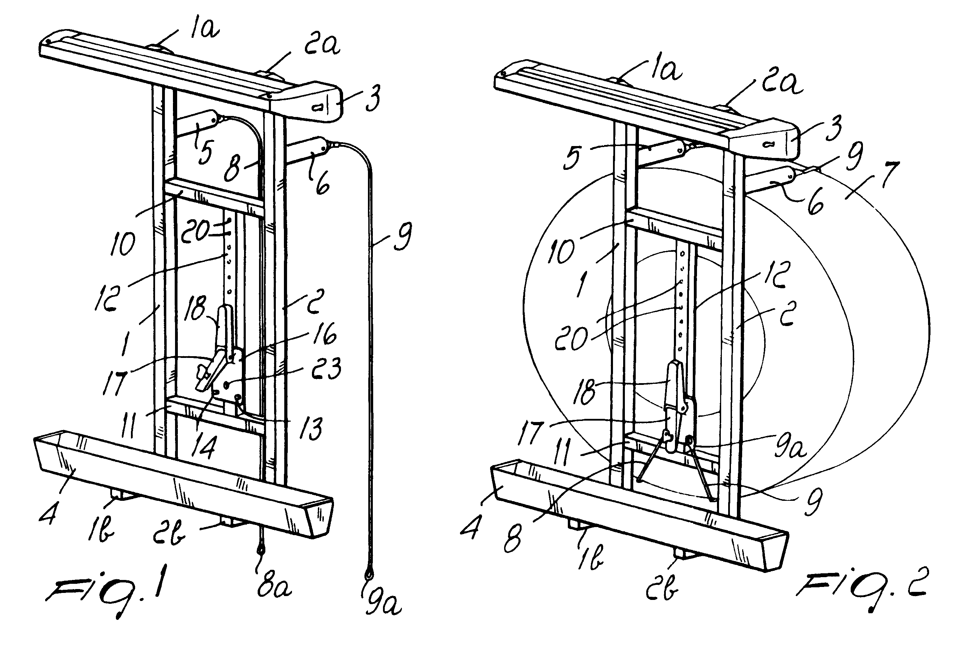

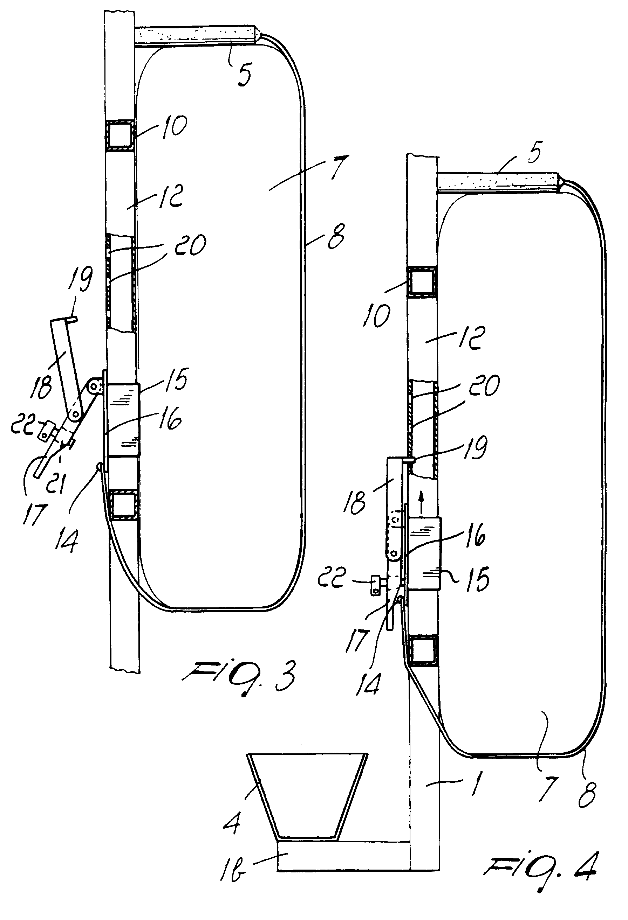

A pair of pins 5 and 6 protrudes from the uprights 1 and 2 on the side opposite to the tray 4 and to the retainer 3; said pins can rest, figure 2, on the peripheral region of a spare tire 7 fixed to the outside of a motor vehicle.

A respective flexible tension element 8 and 9 is fixed to the ends of each pin 5 and 6; each tension element can be passed, as shown in figure 2, around the spare tire 7 with an approximately diametrical arrangement. The tension elements 8 and 9 can be constituted by chains, cables made of plastics or metal, bands, straps and the like, and must always have good flexibility in order to adapt to the shapes of the spare tire 7.

The uprights 1 and 2 are mutually joined by cross-members 10 and 11 which support, between them, a central upright 12 on which means for tightening the tension elements 8 and 9 are mounted; said tension elements can be removably fixed to mushroom-shaped pins 13 and 14 arranged on the tightening means.

The tightening means comprise a slider 15 which can slide along the central upright 12 and on which a plate 16 for supporting the pins 13 and 14 is fixed.

The tightening means are constituted for example by an actuation lever 17 which is articulated to the plate 16 and, in a median portion, to an engagement lever 18 provided with coupling means, such as raised portions 19, which are directed toward the upright 12 and coupleable to complementarily shaped accommodation seats 20 formed on the upright 12. The accommodation seats 20 are constituted by holes which are shaped complementarily with respect to the raised portions 19 and position the plate 16 along the upright 12 by cooperating with said raised portions, consequently fastening the tension elements 8 and 9.

Each tension element 8 and 9 is provided with an eyelet 8a and 9a in the respective free end portion for coupling to the respective pins 13 and 14 arranged on the plate 16.

A lock 21, operated by a key 22, is inserted in the first lever 17; the lock blocks the first lever 17 on the plate 16, which is provided with a blocking opening 23 coupleable to the lock 21.

Operation is as follows: once the pins 5 and 6 have been rested on the wheel 7, the tension elements 8 and 9 are passed between the wheel and the motor vehicle until they are engaged, from below, with the mushroom-shaped pins 13 and 14. Then the slider 15 is moved until initial manual tightening is obtained. Then the raised portion 19 is engaged in one of the holes 20. Finally, tightening is performed by moving the first lever 17 onto the plate 16, thus moving the slider 15, and by locking the assembly by closing the lock 21 with the key 22 in the seat 23.

Practical tests have shown that the present invention achieves the intended objects, constituting a ski rack which can be adapted perfectly to different motor vehicles and to different wheel diameters without having to manufacture different plates for coupling to the spare tire supporting bolts.

Furthermore, the fixing means as described above may be replaced with tightening devices of a different kind, such as worm-screw tighteners, jacks and the like.

In practice, the materials employed, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A rack assembly for supporting items on a motor vehicle having a spare tire (7) fixed to the outside of the vehicle body, particularly all-terrain vehicles, closed vans and the like, said rack comprising a frame (1,2,10,11,12) with pin means (5,6) for resting on the spare tire (7) attached outwardly on the vehicle and two flexible tension elements (8,9) for wrapping substantially diametrically around the spare tire and having first ends fixedly connected to said pins or frame, characterized by a movable slider (15) of a tightening means (13-20) directly movably slidably connected to said frame for releasably tightening said tension elements which both have second ends (8a,9a) connected to said tightening means such that operation of said tightening means including slidably moving said slider with respect to said frame releasably tightens simultaneously both of said tension elements.

2. Rack assembly according to claim 1, characterised in that said frame (1,2,10,11) supports a tray (4) for the resting of the rear ends of skis and a ski retainer (3), and said pins (5,6) protrude from said frame on the side opposite to said tray and to said retainer.

3. Rack assembly according to claim 2, characterized in that said tightening means comprise said movable slider (15) suitable to slide along a central upright (12) of said frame, a plate (16) for supporting connecting pins (13,14) for said tension elements being rigidly coupled to said slider, an actuation lever (17) being articulated on said plate, a coupling lever (18) being articulated to a median position of said actuation lever and being provided with means (19) for coupling to complementarily shaped accommodation seats (20) formed on said central upright.

4. Rack assembly according to claim 3, characterized in that said coupling means comprise raised portions (19) which protrude from said coupling lever (18) and are insertable in the accommodation seats (20) to position said slider (15) on said central upright (12).

5. Rack assembly according to one or more of the preceding claims 3 to 4, characterized in that each one of said tension elements (8,9) has an eyelet (8a,9a) in its respective free end portion suitable to fit on said pins (13,14) arranged on said plate (16).

6. Rack assembly according to one or more of the preceding claims 2 to 5, characterized in that it comprises key-operated means (21-23) for releasably blocking the actuation of said tightening means

7. Rack assembly according to one or more of the preceding claims 3 to 5, characterized in that a key-operated lock (21) is inserted on said actuation lever (17) and is suitable to lock said actuation lever on said plate (16), which is provided with a locking opening (23) coupleable to the lock.

## Patentansprüche

1. Halteranordnung zum Halten von Gegenständen an einem Kraftfahrzeug mit einem außen an der Fahrzeugkarosserie befestigten Ersatzreifen (7), insbesondere an Geländefahrzeugen, geschlossenen Lastkraftwagen und dergleichen, wobei der Halter einen Rahmen (1, 2, 10, 11, 12) mit Stiftvorrichtungen (5,6) zum Abstützen an dem außen am Kraftfahrzeug angebrachten Ersatzreifen (7) und zwei flexible Spannelemente (8, 9) zum im wesentlichen diametralen Herumlegen um den Ersatzreifen hat, die jeweils ein erstes Ende haben, das fest mit den Stiften oder dem Rahmen verbunden ist, **gekennzeichnet** durch einen verschiebbaren Schieber (15) eines Festziehmittels (13-20), der zum lösbaren Festziehen der Spannelemente gleitend direkt mit dem Rahmen verbunden ist, wobei die Spannelemente jeweils ein zweites Ende (8a, 9a) haben, das so mit den Festziehmitteln verbunden ist, daß eine Betätigung der Festsiehmittel mit gleitendem Verschieben des Schiebers am Rahmen beide Spannelemente gleichzeitig lösbar festzieht.

2. Halteranordnung nach Anspruch 1, dadurch **gekennzeichnet**, daß der Rahmen (1, 2, 10, 11) eine Schale (4) zum Abstützen der hinteren Enden von Skiern und eine Skihalterung (3) trägt, und daß die Stifte (5,6) vom Rahmen auf der der Schale und der Halterung gegenüberliegenden Seite hervorstehen.

3. Halteranordnung nach Anspruch 2, dadurch g**ekennzeichnet**, daß die Festziehmittel den verschiebbaren Schieber (15), der entlang eines Mittelpfostens (12) des Rahmens gleitend verschiebbar ist, eine starr mit dem Schieber verbundene Platte (16) zum Tragen der Verbindungsstifte (13,14) für die Spannelemente, einen an der Platte angelenkten Betätigungshebel (17) sowie einen in einem mittleren Bereich des Betätigungshebels an diesem angelenkten Kopplungshebel (18) mit Mitteln (19) zum Koppeln mit komplementär geformten Aufnahmeöffnungen (20) am Mittelpfosten enthalten.

4. Halteranordnung nach Anspruch 3, dadurch **gekennzeichnet**, daß die Kopplungsmittel hervorstehende Abschnitte (19) haben, die vom Kopplungshebel (18) hervorragen und in die Aufnahmeöffnungen (20) einführbar sind, um den Schieber (15) am Mittelpfosten (12) zu positionieren.

5. Halteranordnung nach einem oder mehreren der vorhergehenden Ansprüche 3 bis 4, dadurch **gekennzeichnet**, daß jedes der Spannelemente (8, 9) an seinem jeweiligen freien Endabschnitt eine Öse (8a, 9a) hat, die so ausgebildet ist, daß sie auf die an der Platte (16) angeordneten Stifte (13,14) paßt.

6. Halteranordnung nach einem oder mehreren der vorhergehenden Ansprüche 2 bis 5, dadurch **gekennzeichnet**, daß sie mit einem Schlüssel betätigbare Mittel (21-23) zum lösbaren Blockieren der Betätigung der Festziehmittel (13-20) hat.

7. Halteranordnung nach einem oder mehreren der vorhergehenden Ansprüche 3 bis 5, dadurch **gekennzeichnet**, daß ein mit einem Schlüssel betätigbares Schloß (21) in den Betätigungshebel (17) eingesetzt und dazu geeignet ist, den Betätigungshebel an der Platte (16) zu verriegeln, die eine mit dem Schloß verbindbare Verriegelungsöffnung (23) hat.

## Revendications

1. Ensemble de support pour supporter des objets sur un véhicule automobile possédant une roue de secours (7) fixée à l'extérieur de la carrosserie du véhicule, en particulier des véhicules tout terrain, fourgons fermés et analogues, ledit support comportant un cadre (1, 2, 10, 11, 12) avec des tiges (5,6) pour reposer sur la roue de secours (7) fixée à l'extérieur du véhicule, et deux éléments de tension flexibles (8,9) pour un enroulement sensiblement diamétral autour de la roue de secours et possédant des premières extrémités fixées à demeure auxdites tiges ou audit cadre; caractérisé par une coulisse mobile (15) de moyen de serrage (13-20) reliée directement de manière mobile en coulissement audit cadre pour serrer de façon libérable lesdits éléments de tension qui possèdent tous deux des secondes extrémités (8a, 9a) reliées auxdits moyens de serrage de telle sorte que l'actionnement desdits moyens de serrage incluant le déplacement coulissant de ladite coulisse par rapport audit cadre serre de manière libérable simultanément les deux éléments de tension.

2. Ensemble de support selon la revendication 1, caractérisé en ce que ledit cadre (1, 2, 10, 11) supporte un plateau (4) pour le support des extrémités postérieures de skis et un élément de retenue de ski (3), et lesdites tiges (5, 6) font saillie dudit cadre sur le côté opposé audit plateau et audit élément de retenue.

3. Ensemble de support selon la revendication 2, caractérisé en ce que lesdits moyens de serrage comportent ladite coulisse mobile (15) pouvant coulisser le long d'un montant central (12) dudit cadre, une plaque (16) pour supporter des tiges de liaison (13,14) pour lesdits éléments de tension étant couplée de façon rigide à ladite coulisse, un levier d'actionnement (17) étant articulé à ladite plaque, un levier de couplage (18) étant articulé à une position médiane dudit levier d'actionnement et étant muni de moyens (19) pour un accouplement à des sièges de réception de forme complémentaire (20) formés sur ledit montant central.

4. Ensemble de support selon la revendication 3, caractérisé en ce que lesdits moyens d'accouplement comportent des parties surélevées (19) qui font saillie dudit levier d'accouplement (18) et peuvent être introduites dans les sièges de réception (20) pour positionner ladite coulisse (15) sur ledit montant central (12).

5. Ensemble de support selon une ou plusieurs des revendications précédentes 3 à 4, caractérisé en ce que chacun desdits éléments de tension (8, 9) possède un oeillet (8a, 9a) dans sa partie terminale libre respective apte à s'adapter sur lesdites tiges (13,14) disposées sur ladite plaque (16).

6. Ensemble de support selon une ou plusieurs des revendications précédentes 2 à 5, caractérisé en ce qu'il comporte des moyens d'actionnement par clé (21-23) pour bloquer de façon libérable l'actionnement desdits moyens de serrage (13-20).

7. Ensemble de support selon une ou plusieurs des revendications précédentes 3 à 5, caractérisé en ce qu'un verrou actionné par clé (21) est inséré sur ledit levier d'actionnement (17) et est apte à verrouiller ledit levier d'actionnement sur ladite plaque (16), qui est munie d'une ouverture de verrouillage (23) pouvant être couplée au verrou.
